**Europäisches Patentamt**

**European Patent Office**

**Office européen des brevets**

(19)

(11) Veröffentlichungsnummer: **0 208 702**
**B1**

(12)

# EUROPÄISCHE PATENTSCHRIFT

(45) Veröffentlichungstag der Patentschrift:
**06.04.88**

(51) Int. Cl.⁴: **B 22 D 31/00**

(21) Anmeldenummer: **86900057.0**

(22) Anmeldetag: **14.12.85**

(86) Internationale Anmeldenummer:
**PCT/DE 85/00523**

(87) Internationale Veröffentlichungsnummer:
**WO 86/04276 (31.07.86 Gazette 86/17)**

(54) **MISCHBLOCK ZUM MISCHEN EINES BRENNBAREN GASGEMISCHES.**

(30) Priorität: **23.01.85 DE 3502026**

(43) Veröffentlichungstag der Anmeldung:
**21.01.87 Patentblatt 87/4**

(45) Bekanntmachung des Hinweises auf die Patenterteilung:
**06.04.88 Patentblatt 88/14**

(84) Benannte Vertragsstaaten:
**AT CH DE FR GB IT LI**

(56) Entgegenhaltungen:
**EP-A-0 131 800**
**DE-A-2 122 221**
**DE-A-2 440 041**
**FR-A-2 282 602**

**Giesserei, vol. 72, No. 2, 21 January 1985 J. Reissermayer :"Thermisches Entgraten von Zink-Druckguss", pages 39-45**

(73) Patentinhaber: **ROBERT BOSCH GMBH, Postfach 50, D-7000 Stuttgart 1 (DE)**

(72) Erfinder: **CONRAD, Hans- Jürgen, Lessingstr. 25, D-7255 Rutesheim (DE)**
Erfinder: **MAUZ, Wolfgang, Unterer Kasparswald 6, D-7022 Leinfelden- Echterdingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Mischblock nach der Gattung des Patentanspruchs 1. Bei den besonders angesprochenen Anlagen zum thermischen Entgraten von Werkstücken, welche mit einem solchen Mischblock versehen sind, werden beispielsweise Wasserstoff und Sauerstoff aus einem Vorrat in Druckzylinder eingelassen, um danach von Gaseinstoßkolben unter erheblicher Verdichtung bis zu 100 bar durch den Mischblock in einen gasdicht verschlossenen, die zu entgratenden Werkstücke aufnehmenden Brennraum gedrückt zu werden. Beim Zünden des Gasgemisches entsteht eine explosionsartige Verbrennung. Dabei treten kurzzeitig Temperaturen von bis zu mehreren 1000°C auf, bei denen unerwünschte Grate wegschmelzen bzw. mit Hilfe eines gewissen Sauerstoffüberschusses wegbrennen.

Die bei der explosionsartigen Verbrennung auftretenden hohen Drücke und Temperaturen müssen von den Gaseinstoßvorrichtungen ferngehalten werden, weshalb in den Gaszuführungsbohrungen des Mischblocks Ventile angeordnet sind, welche die Bohrungen während des Brennvorgangs gasdicht verschließen, Dazu sind bei einer durch die EP-A-0 131 800, von welcher der Oberbegriff des Auspruchs 1 ausgeht, bekanntgewordenen thermischen Entgratanlage in den Gaszuführungsbohrungen für jede Komponente des einzupumpenden und zu verbrennenden Gasgemisches ein Ventilstößel verschiebbar angeordnet, der in seiner einen Endlage den Gasdurchsatz über den Misch- und Zündkanal zum Brennraum freigibt und in seiner anderen Endlage den Gasdurchsatz sperrt, indem er durch eine äußeren entsprechend bemessene Kraft entgegen dem während des Brennvorgangs auftretenden Druck mit einer kugelförmigen Ventilfläche gegen den Ventilsitz gepreßt wird. Durch die hohe Beanspruchung der Ventile bereitet ihre auch für längere Lebensdauer betriebssichere Ausbildung erhebliche Schwierigkeiten, die mit bekannten Konstruktionen bisher nicht behoben werden konnten. So treten insbesondere durch Verschmutzungen am Ventilsitz Undichtigkeiten auf, welche sich durch die hohe thermische Belastung alsbald verstärken und zur Unbrauchbarkeit der Ventile führen. Davon sind bei einer Anlage stets mehrere Ventile betroffen, nämlich die in den Gaszuführungsbohrungen angeordneten Hauptventile und mindestens ein Entlüftungsventil zum Ablassen des Gasgemisches bei Zündaussetzern und dergleichen, das in einer von einer Gaszuführungsbohrung abgehenden, nach außen führenden Bohrung angeordnet ist.

Es wurde versucht, die Ventile dadurch zu schützen, daß zwischen dem Misch- und Zündkanal des Mischblocks und den Ventilen Bohrungen solcher Länge eingefügt sind, daß das Volumen der in den Bohrungen befindlichen, für sich allein nicht brennbaren Gaskomponenten ausreicht, um ein Schutzpolster zu bilden, welches die Ventile thermisch isoliert und den Explosionsdruck des gezündeten Gasgemisches elastisch abfängt. In der Praxis hat es sich jedoch gezeigt, daß eine solche Gasvorlage nicht in allen Fällen ausreicht, um die die Standzeit der Ventile nachteilig beeinflussenden Faktoren (Druck, Temperatur, Verunreinigung) völlig von den Ventilen fernzuhalten. Durch die DE-PS-2 440 041 ist es außerdem bekannt, anstelle einer Gasvorlage eine Flüssigkeitsvorlage zum Schutz der Ventile zu benutzen. Hierzu sind die Gaszuführungsbohrungen mit den Ventilaufnahmebohrungen über Kanäle verbunden, wobei die Kanäle und die Ventilbohrungen über ein weiteres Ventil mit einer unbrennbaren und gegenüber Brenngas im wesentlichen neutralen Flüssigkeit füllbar sind. Eine solche Flüssigkeitsvorlage bildet zwar einen wirksamen Schutz gegen thermische Überlastung der Ventile, da die Flüssigkeit die beim Zünden des Gasgemisches kurzzeitig auftretenden hohen Temperaturen unter Eigenerwärmung absorbiert. Sie ist jedoch nicht geeignet, die durch die Explosion des Gasgemisches entstehenden hohen Drücke von den Ventilen fernzuhalten, da sie ihr Volumen beibehält. Außerdem ist ein solcher Mischblock in der Herstellung erheblich komplizierter und teurer als ein vergleichbarer Mischblock ohne Flüssigkeitsvorlage.

Der erfindungsgemäße Mischblock mit den kennzeichnenden Merkmalen des Patentanspruchs 1 hat demgegenüber den Vorteil, daß die in den Gaszuführungsbohrungen befindlichen Hauptventile und gegebenenfalls ein Entlüftungsventil sowohl gegen thermische Belastung als auch gegen Verunreinigungen und hohe Drücke optimal geschützt sind und demzufolge sehr lange Standzeiten haben. Das in Misch- und Zündkanal angeordnete Hilfsventil trennt die Hauptventile und das Entlüftungsventil von dem "heißen Bereich", d.h. es blockt den beim Zünden des Gasgemisches auftretenden Explosionsdruck, die heißen, zurückströmenden Gase und die von diesen mitgerissenen Verbrennungsrückstände ab und hält sie von den Hauptventilen und dem Entlüftungsventil fern. In dem Raum zwischen den Hauptventilen und dem Hilfsventil verbleibt lediglich eine geringe Gasmenge, die nicht verbrennt. Die Schließkraft der Hauptventile kann erheblich niedriger gewählt werden als bei bekannten Mischblöcken, da sie nur den Brennkammer-Fülldruck, nicht dagegen den weitaus höheren Explosionsdruck nach dem Zünden des Gasgemisches aufzufangen haben.

Durch die in den Unteransprüchen aufgeführten Maßnahmen sind vorteilhafte Weiterbildungen und Verbesserungen des im Patentanspruch 1 angegebenen Mischblocks möglich. So kann das Hilfsventil als leicht austauschbare Baugruppe in einem als Verschlußstopfen für den Misch- und Zündkanal dienenden Einsatzteil angeordnet sein. Als Hilfsventil wird bevorzugt ein handelsübliches Tellerventil mit oder ohne Natriumkühlung verwendet. Zum Schutze des Hilfsventils ist es ferner von Vorteil, daß der Misch- und Zündkanal eine zwischen dem Hilfsventil und der Zündstelle angeordnete Gasstaustufe enthält. Diese Stufe dämpft die Verbrennungsdruckwelle mit den heißen, rückströmenden Gasen und Verunreinigungen, so daß das Hilfsventil im wesentlichen nur der Temperatur ausgesetzt ist, welche durch die Verbrennung der relativ geringen Gasmenge zwischen Ventil und Gasstaustufe entsteht. Eine zusätzliche thermische Entlastung des Hilfsventils läßt sich dadurch erzielen, daß der Mischblock, insbesondere im Bereich des Ventilsitzes des Hilfsventils, mit Kühlmittelbohrungen versehen ist.

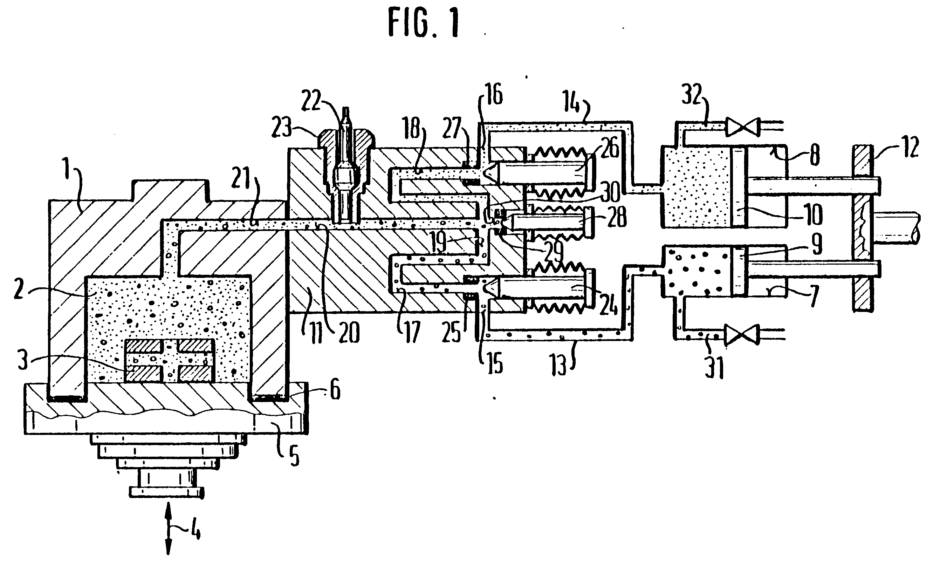

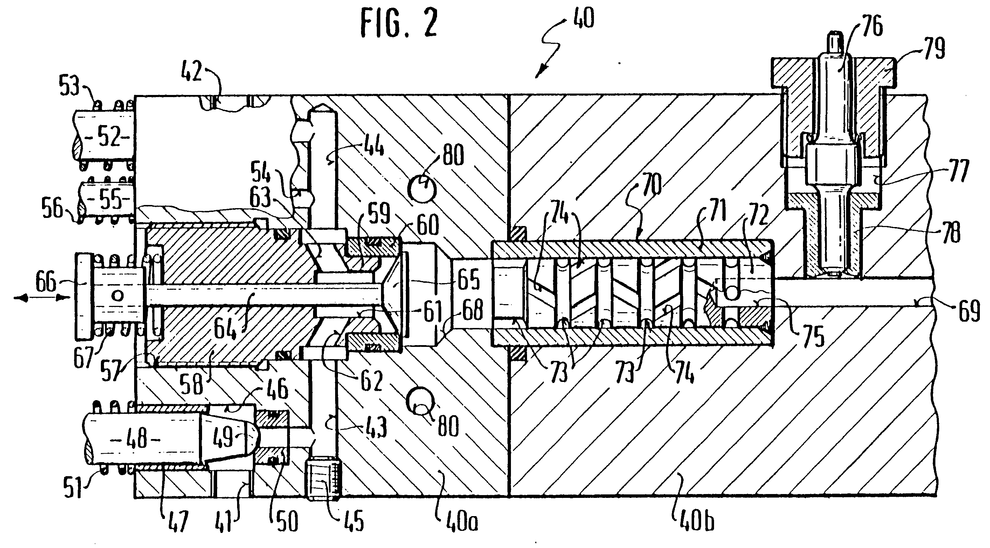

Weitere Merkmale ergeben sich aus der nachfolgenden Beschreibung anhand eines in der Zeichnung dargestellten Ausführungsbeispiels. Es zeigen Figur 1 eine schematische Darstellung einer bekannten Anlage zum thermischen Entgraten von Werkstücken, Figur 2 die wesentlichen Teile eines erfindungsgemäß ausgebildeten Mischblocks in einem Längsschnitt.

In Figur 1 ist mit 1 eine Werkstück-Bearbeitungskammer bezeichnet, die einen Brennraum 2 hat, in dem sich ein zu entgratendes Werkstück 3 befindet. Das Werkstück ruht auf einen in Richtung des Doppelpfeils 4 bewegbaren Teller 5, welcher vor der Auslösung des Füll- und Entgratvorgangs an die Stirnfläche der Werkstück-Bearbeitungskammer 1 angelegt wird und den Brennraum 2 gasdicht verschließt. Zwischen Teller 5 und Stirnfläche ist eine Dichtung 6 angeordnet.

Die Gaskomponenten des Brenngas-Sauerstoffgemisches werden über einen Dosierzylinder 7 für Brenngas bzw. einen Dosierzylinder 8 für Sauerstoff mittels je eines Gaseinstoßkolbens 9 bzw. 10 in einen Mischblock 11 eingebracht. Die Kolben 9, 10 sind durch ein Joch 12 miteinander gekoppelt, so daß sie unter dem Einfluß einer am Joch 12 angreifenden Kraft Hübe gleicher Größe ausführen. Es sind auch Systeme mit hydraulischer Kopplung der Gaseinstoßkolben bekannt. Der Dosierzylinder 8 für Sauerstoff hat ein größeres Volumen als der Dosierzylinder 7 für Brenngas, so daß bei gleichem Fülldruck im Zylinder 8 eine größere Sauerstoffmenge vorhanden ist. Als Standardgemisch ist ein Gemisch mit 0 - 100 % Sauerstoffüberschuß anzusehen, wobei als Brenngas Wasserstoff oder Erdgas bzw. Methan verwendet wird.

Von den Dosierzylindern 7, 8 führt je eine druckfeste Leitung 13 bzw. 14 in den Mischblock 11, der aus einem massiven Metallblock besteht. Die Leitungen 13, 14 münden in je eine Anschlußbohrung 15 bzw. 16 im Mischblock 11, an die sich Gaszuführungsbohrungen 17 bzw. 18 anschließen. Die Bohrungen 17, 18 münden in einen Misch- und Zündkanal, der aus rechtwinklig zueinander angeordneten Bohrungen 19, 20 besteht. Durch die Bohrung 20 und eine weitere, in der Bearbeitungskammer 1 ausgebildete Bohrung 21 strömt das brennbare Gasgemisch in den Brennraum 2 der Kammer. Zum Zünden des Gasgemisches dient eine in die Bohrung 20 hineinragende Zündkerze 22, die in einem Einsatz 23 des Mischblocks 11 sitzt. Anstelle einer Zündkerze kann auch eine Glühkerze oder ein anderer geeigneter Zünder verwendet werden. Zwischen den Bohrungen 15, 17 und 16, 18 befindet sich je ein Ventil 24, 25 bzw. 26, 27. Diese nachstehend Hauptventile genannten Ventile werden am Beginn des Gaseinstoßvorgangs durch Federkraft geöffnet und nach Abschluß des Gaseinstosses, wenn die Kolben 9, 10 ihre Endstellung erreicht haben und sich kein Gas mehr in den Zylindern 7, 8 befindet, wieder geschlossen. Das Schließen der Ventile gegen Federwirkung und das Zuhalten derselben bei der Explosion des in der Kammer 2 befindlichen Gasgemisches erfolgt vorzugsweise durch Hydraulikkraft. Ein weiteres Ventil 28, 29 ist in einer Entlüftungsbohrung 30 angeordnet, die von der Bohrung 19 abgeht. Dieses Ventil ist während des Gaseinstoßvorgangs und während des Entgratprozesses geschlossen. Es wird geöffnet, wenn die Kammer entlüftet und dort vorhandener Überdruck abgebaut werden soll.

Die Anlage arbeitet wie folgt: Brenngas und Sauerstoff werden über Leitungen 31, 32 mit einem Druck von beispielsweise 5 bar in die Zylinder 7, 8 eingelassen. Nachdem die Zylinder gefüllt sind, schieben die Einstoßkolben 9, 10 die Gase über den Mischblock 11 in den Brennraum 2 der geschlossenen Werkstück-Bearbeitungskammer 1 und verdichten sien dort zu dem sogenannten Kammerfülldruck. Dieser kann je nach Art des verwendeten Brenngases und des Werkstoffes der zu bearbeitenden Werkstücke bis zu 100 bar betragen. In den Bohrungen 19, 20 des Mischblocks 11 werden die beiden Gase (Sauerstoff und Brenngas) miteinander vermischt. Nach beendetem Füllvorgang werden die Ventile 24, 25 und 26, 27 geschlossen und anschließend das Gasgemisch mittels der Zündkerze 22 gezündet. Die Flammenfront schreitet dann über die Bohrung 21 zum Brennraum 2 fort. Bei der Explosion tritt im Brennraum kurzzeitig ein Druck bis zu 1700 bar und Temperaturen in der Größenordnung von 3500° C auf. Diesen Drücken und Temperaturen sind auch die Ventile 24, 25; 26, 27 und 28, 29 des Mischblocks 11 ausgesetzt, da die diversen Bohrungen des Mischblocks den heißen Verbrennungsgasen Zutritt zu den Ventilen gewähren. Die Ventilsitze brennen aus, so daß keine einwandfreie Abdichtung der Gaszuführungsbohrungen 17, 18 und der Entlüftungsbohrung 30 mehr gewährleistet ist.

Um die Hauptventile und das Entlüfungsventil gegen solche Belastungen zu schützen und damit ihre Lebensdauer zu erhöhen hat der in Figur 2 dargestellte Mischblock 40 Mittel, um die Ventile gegen hohe Drücke und Temperaturen abzuschirmen. Im einzelnen besteht der Mischblock 40 aus zwei, fest miteinander verbundenen Teilstücken 40a und 40b. Der linke Teil enthält zwei Gasanschlußbohrungen 41, 42 und Gaszuführungsbohrungen 43, 44 für Sauerstoff und Brenngas. Die Bohrungen 43, 44 ergeben sich aus einer Sacklochbohrung, die durch einen Gewindestopfen 45 verschlossen ist. Die Anschlußbohrung 41 führt in eine mehrfach abgestufte Ventilbohrung 46, welche in die Gaszuführungsbohrung 43 mündet. In der Bohrung 46 ist eine Führungshülse 47 für einen Ventilstößel 48 angeordnet, dessen als Halbkugel ausgebildetes Ende 49 mit einer als Ventilsitz dienenden Hülse 50 zusammenarbeitet Den Ventilstößel unschließt ein Federelement 51, das das Ventil in Offenstellung zu halten sucht. Die die Feder 51 überwindende Schließkraft für das Ventil wird von einer nicht dargestellten Hydraulik aufgebracht.

Zwischen den Bohrungen 42 und 44 für die Brenngaszufuhr ist eine identische Ventilanordnung angebracht, von welcher der Übersichtlichkeit wegen nur ein Ventilstößel 52 und eine Öffnungsfeder 53 dargestellt sind.

Von der Gaszuführungsbohrung 44 geht eine Entlüftungsbohrung 54 ab, die gleichfalls ein Ventil enthält. Der Ventilstößel dieses Ventils ist mit 55 und eine ihm zugeordnete Öffnungsfeder mit 56 bezeichnet. Das Entlüfungsventil ist während des Gaseinstosses und während des Entgratvorgangs geschlossen. Es wird nur geöffnet, um erforderlichenfalls durch Ablassen des komprimierten Gasgemisches Druckausgleich zwischen Brennraumdruck und atmosphärischem Druck herstellen zu können.

Zwischen den beiden Hauptventilen 48, 49, 50, 51 bzw. 52, 53 sitzt in einer mehrfach abgestuften Längsbohrung 57 des Mischblock-Teilstücks 40a ein zylindrischer Einsatzteil 58, welcher die Bohrung 57 einseitig verschließt. Der den größten Durchmesser aufweisende Abschnitt dieser Bohrung ist mit einem Gewinde versehen, in das der Einsatzteil 58 eingeschraubt ist. Der Einsatzteil hat an seinem in das innere des Mischblocks gerichteten Ende einen Absatz 59, auf dem eine gegenüber der Bohrungswand abgedicht ete Hülse 60 sitzt. Außerdem ist der Einsatzteil im Bereich des Absatzes 59 mit einer Innenbohrung 61 versehen, von der zwei Seitenbohrungen 62, 63 abgehen, von denen die Bohrung 62 die Verbindung zur Gaszuführungsbohrung 43 und die Bohrung 63 die Verbindung zur Gaszüführungsbohrung 44 herstellt.

In dem Einsatzteil 58 ist der Stößel 64 eines Hilfsventils geführt, dessen Teller 65 mit der als Ventilsitz dienenden Hülse 60 zusammenarbeitet. Am freien Ende des Stößels 64 ist eine Bundhülse 66 befestigt, an der sich eine Feder 67 abstützt. Diese Feder ist bestrebt, das Hilfsventil in der dargestellten Schließstellung zu halten, in welcher sich sein Teller 65 dichtend gegen die Hülse 60 legt. Das Hilfsventil wird synchron mit den beiden Hauptventilen gesteuert, d.h. alle drei Ventile sind während des Gaseinstoßvorgangs geöffnet und werden nach Beendigung des Gaseinstoßes vor dem Zünden des Gasgemisches geschlossen.

An die den Einsatzteil 58 aufnehmende Bohrung 57 schließt sich eine Bohrung 68 an, die in eine im Teilstück 40b des Mischblocks 40 ausgebildete Stufenbohrung 69 übergeht. In dem den größeren Durchmesser aufweisenden Teil dieser Bohrung ist eine Gasstaustufe 70 untergebracht. Diese besteht im Ausführungsbeispiel aus einer Hülse 71 und einem in diese eingeschweißten, massiven Rundkörper 72. Der Umfang des Rundkörpers ist mit als Gasführungskanäle dienenden Einstichen 73, 74 versehen, von denen die parallel zueinander liegenden Einstiche 73 ringförmig über den Umfang des Rundkörpers 72 verlaufen, während die Einstiche 74 die Verbindung zwischen den Einstichen 73 herstellen. Der Rundkörper 72 hat an seinem der Bohrung 68 abgewandten Ende eine zentrische Bohrung 75, an die sich der den kleineren Durchmesser aufweisende Teil der Stufenbohrung 69 anschließt. In diesen Bohrungsteil ragt eine Zündkerze 76, für die im Teilstück 40b des Mischblocks 40 eine Bohrung 77 vorgesehen ist. Die Bohrung 77 enthält eine Hülse 78 als Paßsitz für die Zündkerze sowie eine die Kerze in den Paßsitz pressende Gewindebuchse 79.

Die Bohrungen 61, 68, 69, 75 und die Einstiche 73, 74 bilden zusammen einen Misch- und Zündkanal für die durch die Bohrungen 41, 46, 43, 62 bzw. 42, 44, 63 bei geöffneten Hauptventilen und geöffnetem Hilfsventil eintretenden Gaskomponenten. Eine erste Vermischung erfahren die Gaskomponenten hierbei in der Bohrung 61 des Einsatzteils 58 und in der sich daran anschließenden Bohrung 68 des Teilstücks 40a des Mischblocks 40. In der Gasstaustufe 70 wird die Vermischung durch Umlenkung und Verwirbelung der Gase in den Einstichen 73, 74 verbessert, so daß im Bereich der Zündkerze 76 ein sehr zündfreudiges Gasgemisch vorhanden ist, das eine gute Reproduzierbarkeit der Entgratergebnisse sicherstellt.

Außer der beschriebenen Funktion als statischer Mischer für die Gaskomponenten beim Gaseinstoßvorgang erfüllt die Gasstaustufe eine weitere, wichtige Funktion, indem sie nach der Explosion des Gasgemisches im Brennraum den Rückstrom der heißen und unter hohem Druck stehenden Gase aus dem Brennraum in den Bereich der Teile 60, 65 des Hilfsventils durch Umlenkung abblockt und dadurch eine übermäßige Belastung des Ventils durch Hitze und Druck verhindert. Am Ventilteller 65 und am Ventilsitz 60 herrscht im wesentlichen nur die Temperatur, die bei der Verbrennung der relativ geringen Gasmenge in der Bohrung 68 entsteht.

Die im Einsatz 58 ausgebildete Bohrung 61 ist während des Entgratvorgangs durch das Hilfsventil gegenüber der Bohrung 68 abgeschlossen, so daß die in ihr befindliche, geringe und minimal vermischte Gasmenge nicht verbrennen kann. Die in den Gaszuführungsbohrungen 43, 44 angeordneten Hauptventile und ebenso das Entlüftungsventil sind demzufolge vor jeglicher, beim Entgratvorgang auftretenden Belastung optimal geschützt und brauchen daher nur noch selten ausgewechselt zu werden. Der Austausch des etwas stärker belasteten Hilfsventils ist relativ einfach und weniger kostspielig als der gleichzeitige Austausch zweier Hauptventile und eines Entlüftungsventils. Als zusätzliche Maßnahme zur thermischen Entlastung des Hilfsventils kann dieses im Bereich des Ventilsitzes gekühlt sein. Hierzu sind im Teilstück 40a des Mischblocks 40 Kühlflüssigkeit führende Bohrungen 80 vorgesehen. Außerdem können handelsübliche mit Natrium gefüllte Ventile eingesetzt werden, die einen hohen Wärmeabfluß haben.

## Patentansprüche

1. Mischblock (40) zum Mischen eines aus mindestens zwei Komponenten bestehenden brennbaren Gasgemisches zur Behandlung von Materialien mittels Temperatur- und Druckstößen durch Zünden des Gasgemisches, insbesondere für thermische Entgratanlagen, mit einer in einen Mischund Zündkanal (61, 68, 69, 73, 74, 75) mündenden Gaszuführungsbohrung (43, 44) für jede Gaskomponente und einem Hauptventil (48, 49, 50, 51 bzw. 52, 53) in jeder Gaszuführungsbohrung (43, 44) zum Einlassen der Gaskomponenten in den Misch- und Zündkanal (61, 68, 69, 73, 74, 75) und zum gasdichten Verschließen der Gaszuführungsbohrungen (43, 44) während des Brennvorgangs, dadurch gekennzeichnet, daß zwischen einer Zündstelle (76) für das Gasgemisch und den Einmündungen der Gaszuführungsbohrungen (43, 44) im Misch- und Zündkanal (61, 68, 69, 73, 74, 75) ein synchron mit den in den Gaszuführungsbohrungen befindlichen Hauptventilen (48, 49, 50, 51 bzw. 52, 53) gesteuertes Hilfsventil (60, 64, 65, 66, 67) angeordnet ist.

2. Mischblock nach Anspruch 1, dadurch gekennzeichnet, daß das Hilfsventil (60, 64, 65, 66, 67) in einem als Verschlußstopfen für den Misch- und Zündkanal (61, 68, 69, 73, 74, 75) dienenden Einsatzteil (58) angeordnet ist.

3. Mischblock nach Anspruch 2, dadurch gekennzeichnet, daß der Einsatzteil (58) eine zentrische, zu den Gaszuführungsbohrungen (43, 44) hin offene und mit dem Misch- und Zündkanal (61, 68, 69, 73, 74, 75) fluchtende Bohrung (61) hat, welche durch das Hilfsventil (60, 64, 65, 66, 67) verschließbar ist.

4. Mischblock nach einem der vorhergehenden Ansprüche, dadurch gekennzeichnet, daß das Hilfsventil (60, 64, 65, 66, 67) als Tellerventil ausgebildet ist.

5. Mischblock nach einem der vorhergehenden Ansprüche, dadurch gekennzeichnet, daß der Misch- und Zündkanal (61, 68, 69, 73, 74, 75) eine zwischen dem Hilfsventil (60, 64, 65, 66, 67) und der Zündstelle (76) angeordnete Gasstaustufe (70) enthält.

6. Mischblock nach Anspruch 5, dadurch gekennzeichnet, daß die Gasstaustufe (70) als Einsatzteil (72) ausgebildet ist, das in einer zum Misch- und Zündkanal (61, 68, 69, 73, 74, 75) gehörenden Bohrung (69) des Mischblocks (40) sitzt.

7. Mischblock nach einem der vorhergehenden Ansprüche, dadurch gekennzeichnet, daß der Mischblock (40), insbesondere im Bereich des Ventilsitzes (60) des Hilfsventils (60, 64, 65, 66, 67), mit Kühlflüssigkeits-Bohrungen (80) versehen ist.

## Claims

1. Mixer block (40) for mixing a combustible gas mixture consisting of at least two components for the treatment of materials by temperature and pressure shocks by igniting the gas mixture, particularly for thermal deburring installations, having a gas supply bore (43, 44) for each gas component leading into a mixing and ignition channel (61, 68, 69, 73, 74, 75) and a principal valve (48, 49, 50, 51 and 52, 53 respectively) in each gas supply bore (43, 44) for the admission of the gas components into the mixing and ignition channel (61, 68, 69, 73, 74, 75) and for the gas-tight closure of the gas supply bores (43, 44) during the combustion process, characterized in that an auxiliary valve (60, 64, 65, 66, 67) controlled synchronously with the principal valves (48, 49, 50, 51 and 52, 53 respectively) present in the gas supply bores is arranged between an ignition point (76) for the gas mixture and the orifices of the gas supply bores (43, 44) in the mixing and ignition channel (61, 68, 69, 73, 74, 75).

2. Mixer block according to Claim 1, characterized in that the auxiliary valve (60, 64, 65, 66, 67) is arranged in an insert part (58) serving as plug for the mixing and ignition channel (61, 68, 69, 73, 74, 75).

3. Mixer block according to Claim 2, characterized in that the insert part (58) has a central bore (61) open towards the gas supply bores (43, 44) and aligned with the mixing and ignition channel (61, 68, 69, 73, 74, 75), which is closeable by the auxiliary valve (60, 64, 65, 66, 67).

4. Mixer block according to any of the previous Claims, characterized in that the auxiliary valve (60, 64, 65, 66, 67) is constructed as a disc valve.

5. Mixer block according to any of the previous Claims, characterized in that the mixing and ignition channel (61, 68, 69, 73, 74, 75) contains a gas deceleration stage arranged between the auxiliary valve (60, 64, 65, 66, 67) and the ignition point (76).

6. Mixer block according to Claim 5, characterized in that the gas deceleration stage (70) is constructed as an insert part (72) which is located in a bore (69) of the mixer block (40) belonging to the mixing and ignition channel (61, 68, 69, 73, 74, 75).

7. Mixer block according to any of the previous Claims, characterized in that the mixer (40) is provided with cooling-liquid bores (80), particularly in the region of the valve seat (60) of the auxiliary valve (60, 64, 65, 66, 67).

situèe dans un alésage (69) du bloc de mélange (40), appartenant au canal de mélange et d'allumage (61, 68, 69, 73, 74, 75).

7. Bloc de mélange selon l'une des revendications précédentes, caractérisé en ce que le bloc de mélange (40) possède des alésages de liquide de refroidissement (80), notamment au voisinage du siège de soupape (60) de la soupape auxiliaire (60, 64, 65,66, 67).

**Revendications**

1. Bloc de mélange (40) pour mélanger un mélange gazeux combustible, composé d'au moins deux composants pour le traitement de matériaux au moyen de chocs de température et de pression, notamment pour des installations d'ébarbage thermique, avec un alésage d'amenée de gaz (43, 44) pour chaque composant de gaz, qui débouche dans un canal de mélange et d'allumage (61, 68, 69, 73, 74, 75) et une soupape principale (48, 49, 50, 51 respectivement 52, 53) qui est disposée dans chaque alésage d'amenée de gaz (43, 44) pour l'admission des composants du gaz dans le canal de mélange et d'allumage (61, 68, 69, 73, 74, 75) et pour obturer de manière étanche aux gaz les alésages d'amenée de gaz (43, 44) pendant le processus de combustion, caractérisé en ce qu'une soupape auxiliaire (60, 64, 65, 66, 67) commandée de manière synchrone avec les soupapes principales (48, 49, 50, 51 respectivement 52, 53), est disposée dans le canal de mélange et d'allumage (61, 68, 69, 73, 74, 75), entre un point d'allumage pour le mélange (76) et les embouchures des alésages d'amenée de gaz (43, 44).

2. Bloc de mélange selon la revendication 1, caractérisé en ce que la soupape auxiliaire (60, 64, 65, 66, 67) est disposée dans une pièce intercalaire (58) servant de bouchon d'obturation pour le canal de mélange et d'allumage (61, 68, 69, 73, 74, 75).

3. Bloc de mélange selon la revendication 2, caractérisé en ce que la pièce intercalaire (58) possède un alésage (61) centré, débouchant vers les alésages d'amenée de gaz (43, 44) et aligné avec le canal de mélange et d'allumage (61, 68, 69, 73, 74, 75), qui est obturable par la soupape auxiliaire (60, 64, 65, 66, 67).

4. Bloc de mélange selon l'une des revendications précédentes, caractérisé en ce que la soupape auxiliaire (60, 65, 66, 67) est conformée en une soupape à disques.

5. Bloc de mélange selon l'une des revendications précédentes, caractérisé en ce que le canal de mélange et d'allumage (61, 68, 69, 73, 74, 75) contient un barrage de gaz (70) disposé entre la soupape auxiliaire (60, 64, 65, 66, 67) et le point d'allumage (76).

6. Bloc de mélange selon la revendication 5, caractérisé en ce que le barrage de gaz (70) est exécuté par une pièce intermédiaire (72), qui est

# FIG. 1

FIG. 2

0 208 702